# EUROPEAN PATENT APPLICATION

(11) **EP 3 711 486 A1**
(43) Date of publication of application: **23.09.2020**
(21) Application number: 19163729.7
(22) Date of filing: 19.03.2019
(51) Int. Cl.: A01N 25/30, A01N 33/12, A01N 57/34, A01N 61/00, A01P 1/00

(54) **BIOCIDAL COMPOSITIONS INCLUDING A PHOSPHONIUM QUATERNARY CATIONIC SURFACTANT AND METHODS FOR USING SAME**

(71) Applicant: Rhodia Operations, 93300 Aubervilliers (FR)
(72) Inventor: GUNAWAN, Stanley, The Woodlands, Texas 77382 (US); ARMSTRONG, Charles David, Tomball, Texas 77377 (US); JONES, Chris, Walsall, WS6 7BS (GB)
(74) Representative: Ridray, Annabelle

(57) **Abstract**

Biocidal compositions including a phosphonium quaternary surfactant compound and a biopenetrant, wherein the biopenetrant includes an anionic polymer of an anionic unsaturated carboxylic acid or a copolymer of an unsaturated carboxylic acid with a sulphonic acid, the polymer or copolymer being either terminated by vinylphosphonic acid (VPA) or vinylidene-1, 1-diphosphonic acid (VDPA) or having such monomers incorporated into the polymer backbone. The compositions preferably further include a quaternary ammonium salt cationic surfactant. The compositions optionally include a tetrakis(hydroxyalkyl)phosphonium salt biocide, wherein the salt is selected from sulphate, phosphite, bromide, fluoride, chloride, phosphate, carbonate, acetate, formate, citrate, borate, and silicate. Methods of using same are also provided.

## Description

### FIELD OF THE INVENTION

The present invention relates to a biocidal composition comprising: a phosphonium quaternary surfactant compound, a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having vinylphosphonic acid and/or vinylidene-1, 1-diphosphonic acid monomers incorporated into the polymer backbone, and a quaternary ammonium cationic surfactant biocide. The present invention also relates to the treatment of a water system contaminated with microorganisms, using a method that disrupts microbial activity, e.g. it may disrupt bacterial activity. The method therefore prevents or reduces the detrimental effects from the presence of active microorganisms, such as bacteria, and archaea.

### BACKGROUND OF THE INVENTION

Biological contamination is a costly and undesirable phenomenon that can occur in hydrocarbon-containing systems such as oil and gas reservoirs, processing and injection systems, transmission and pipelines or storage tanks.

To increase the yield from hydrocarbon-containing reservoirs in subterranean formations, water is pumped under pressure into the reservoir, to shepherd the crude hydrocarbon towards the production wells and to maintain reservoir pressure. This water is therefore injected from a water injection system into the reservoir, passes through the reservoir and then leaves the reservoir (as "produced water"). The water used is commonly seawater. Further, the water will be de-aerated in order to avoid corrosion. The injection of cold de-aerated seawater can provide a number of key elements for biological contamination. For example, the cooling effect of the seawater reduces the temperature around the injector to within the thermal viability limits of prokaryotes. The pH of the seawater is also within the required range for microbial activity. Therefore biological contamination of such reservoirs can easily become a problem.

Biological contamination can result in various detrimental effects from the presence of active microorganisms, such as bacteria and archaea, in the hydrocarbon-containing reservoirs and process waters. These detrimental effects include biofouling, corrosion, and biological souring.

**The** activity of sulfate-reducing prokaryotes (SRP) within hydrocarbon-containing reservoirs is known to cause significant problems for the industry. This is due to metabolic H₂S production leading to problems such as souring and corrosion of pipelines and production facilities.

**Also,** general heterotrophic bacteria (GHB) and acid-producing bacteria (APB) can cause microbial corrosion and biofouling in sulphate scarce systems, typically fields that do not have a sulphate rich source or injection water.

Biological souring involves sulphate-reducing prokaryotes (SRP) consuming carbon and reducing sulphate to generate hydrogen sulphide. Once established, the microbes can multiply and spread throughout the reservoir resulting in a potentially rapid rise in hydrogen sulphide production.

In addition, other microbes are known to be problematic, such as general heterotrophic bacteria (GHB) and acid-producing bacteria (APB). In particular, methanogenic archaea have been detected in high numbers (up to 10⁸ cells per gram solids) in oil production facilities. It is believed that methanogenic species are involved in microbially-induced corrosion (MIC), due to them consuming hydrogen and CO₂ in the production of methane. Additionally, some strains of methanogenic species (e.g. Methanosarcinales species) can produce H₂S in their metabolisms, therefore leading to leading to problems such as souring and corrosion of pipelines and production facilities.

In order for biological souring to occur, three conditions must be met:
1. There have to be sulphate-reducing prokaryotes (SRP) present. These may be sulphate-reducing bacteria (SRB) and/or sulphate-reducing archaea (SRA).
**2.** The substrates required for microbial proliferation must be present in sufficient amounts. Generally, in order to proliferate, SRP require the availability of metabolisable carbon and sulphate substrates, in addition to the usual elements essential for biomass growth such as phosphate, nitrogen, and trace metals.
**3.** The environmental conditions, such as pH, temperature, redox potential and pressure, must be within the ranges that permit the SRP to function.

De-aerated seawater provides suitable reducing conditions for the SRP and the high sulphate levels provide the required sulphur source. Therefore biological souring is commonly encountered in hydrocarbon-containing reservoirs, where seawater is pumped under pressure into the reservoir.

Reservoir souring has been defined as a concentration of 3 ppm or greater, by volume, of hydrogen sulphide gas (H₂S) in the produced fluid (R.D. Eden, P.J. Laycock and M. Fielder, 1993, Offshore Technology Report OTH 92 385, Health and Safety Executive). Hydrogen sulphide is highly undesirable in the produced fluids since it is toxic and highly corrosive to production tubulars and processing equipment, and, if hydrogen sulphide is present as a contaminant this adversely affects the sales quality of the oil and gas.

The generation of hydrogen sulphide in hydrocarbon-containing systems can therefore have health and safety implications, may cause corrosion of steel and other materials, and may give rise to costs associated with scavenging the hydrogen sulphide from the hydrocarbon fluids. It is therefore desirable to prevent or reduce the generation of hydrogen sulphide in hydrocarbon-containing systems.

There are three known options for dealing with biological reservoir souring:
1. Preventing or inhibiting the establishment of SRP within a reservoir (known as keeping the reservoir "sweet").
2. Remediating a reservoir that has already soured, through the use of a biocide to destroy the SRP.
3. Dealing with the produced H₂S gas, for example, through dosing with scavenger chemicals.

Generally, biological contamination of systems, such as biofouling, corrosion, and biological souring, will be addressed by adding biocide to the system, in order to destroy the microbes or other bacteria that are causing the detrimental effects. This is the case for sulfate-reducing prokaryotes (SRP), such as sulphate-reducing bacteria (SRB) and/or sulphate-reducing archaea (SRA), and for other problematic microbes, such as general heterotrophic bacteria (GHB) and acid-producing bacteria (APB), or in particular methanogenic species such as methanogenic archaea.

The region of reservoir that is suitable for microbial activity is termed the thermal viability shell (TVS). The injection of fluid that is cool, relative to the ambient reservoir temperature, results in a reduction in temperature and this permits the activity of microorganisms that would otherwise be incapable of functioning at the ambient reservoir temperature. Thus over the production life of the reservoir the TVS will grow, increasing the volume of reservoir capable of supporting biological activity.

Tetrakis(hydroxymethyl)phosphonium sulphate (THPS) has been used as a biocide in the role of remediation. THPS has a biocidal effect on various gram positive and gram negative bacteria and its proven effect on archaea confirms THPS can impact a variety of cell structures. A typical commercial THPS is a 75 wt.% THPS biocidal solution, typically know in the industry as THPS 75% or THPS 75. THPS 75 is a broad-spectrum biocide developed to inhibit growth of algae, bacteria, yeasts and fungi in process waters used in various industrial applications. It is typically a 75 - 77% w/w aqueous solution of tetrakis (hydroxymethyl) phosphonium sulfate.

Published PCT application no. WO 99/33345 discloses biocidal compositions comprising "THP", a non-surfactant biopenetrant compatible with "THP" and optionally a surfactant. The term "THP" is defined in WO 99/33345 as meaning either a tetrakis(hydroxyalkyl)phosphonium salt or a tris(hydroxyalkyl)phosphine. To avoid confusion we shall hereinafter refer to these compounds as "THP salts" or "THP" respectively. Examples of non-surfactant biopenetrants disclosed in the WO 99/33345 include phosphonated derivatives of carboxylic acids, for example the phosphonated telomers disclosed in published European patent applications EP-A-0 491 391 and EP-A-0 861 846. Other non-surfactant biopenetrants disclosed in WO 99/33345 include a copolymer of N, N, N', N'-tetramethyl-1,2-diaminoethane with bis(2-chloroethyl)ether. This is commercially available under the trade name WSCP.

United States Patent Application Publication Nos. 2009/0186858 and 2018/0064112 to Talbot et al. discloses a composition comprising a THP salt and a biopenetrant, in which the biopenetrant comprises a polymer of an unsaturated carboxylic acid or a copolymer of an unsaturated carboxylic acid with a sulphonic acid, the polymer or copolymer being terminated by a mono- or diphosphonated unsaturated carboxylic acid group or having such monomers incorporated into the polymer backbone.

United States Patent Application Publication No. 2013/0259953 to Martin discloses a combination biocide (Glutaraldehyde or OPA), quaternary phosphonium biocide (preferably TTPC), alcohol (preferably isopropyl alcohol), and functional excipients for the oil and gas recovery industry. The functional excipients for the oil and gas recovery industry are a cellulose type proppant, a poloxamer wetting agent, a friction-reducing pluronic block copolymer, a drag reducing agent such as polyethylene oxide, and a flocculating agent. The OPA may be of the dialdehyde C₆H₄(CHO)₂ form, and the Glutaraldehyde of formula C₅H₈O₂.

United States Patent Application Publication No. 10,004,233 to Kramer discloses a method of treating an aqueous system to inhibit growth of one or more micro-organisms therein and/or to reduce the number of live micro-organisms therein. The method comprises adding treatment agents to the aqueous system and wherein the treatment agents comprise: (a) a phosphonium compound; and (b) an oxazolidine compound.

### SUMMARY OF THE INVENTION

The invention includes compositions comprising the phosphonium quaternary surfactant compound, for example TTPC, with the biopenetrant without quaternary ammonium cationic surfactant. Such compositions may optionally further comprise a tetrakis(hydroxyalkyl)phosphonium salt (THP salt) as an additional biocide and / or such compositions may optionally comprise quaternary ammonium cationic surfactant as an additional biocide.

Thus the present invention provides a biocidal composition comprising:
a phosphonium quaternary surfactant, wherein the phosphonium quaternary surfactant compound is a tetra alkyl phosphonium compound having a formula (I): 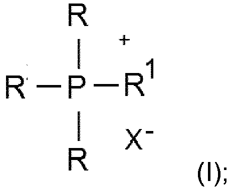 wherein each R is independently a C1-C6 alkyl group which is unsubstituted or substituted by a cyano, hydroxyl, esterified hydroxyl or aryl group; R1 represents a C8-C18 alkyl group which is linear or branched; and X represents either chlorine or bromine; and
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having vinylphosphonic acid and/or vinylidene-1, 1-diphosphonic acid monomers incorporated into the polymer or copolymer backbone, or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone.

This biopenetrant polymer of an unsaturated carboxylic acid or a copolymer of an unsaturated carboxylic acid with an unsaturated sulphonic acid or salt thereof is used to facilitate the penetration of biocide into the biofilm. This biopenetrant polymer or copolymer is typically anionic and generally provided as a polyanionic solution.

Preferably the compositions comprise Quaternary ammonium cationic surfactant. Quaternary ammonium cationic surfactant is a fast kill biocide. It would be desirable to provide a biocidal composition in which Quaternary ammonium cationic surfactant would be compatible with this biopenetrant polymer of an unsaturated carboxylic acid or a copolymer of an unsaturated carboxylic acid with an unsaturated sulphonic acid.

Unexpectedly including the selected phosphonium quaternary surfactant compound in a mixture comprising the biopenetrant and the quaternary ammonium cationic surfactant prevents the formation of precipitate. Phosphonium quaternary surfactant compound, for example TTPC, induces compatibility between the quaternary ammonium compounds and the biopenetrant.

Thus, the present invention preferably provides a biocidal composition comprising:
a phosphonium quaternary surfactant, wherein the phosphonium quaternary surfactant compound is a tetra alkyl phosphonium compound having a formula (I): 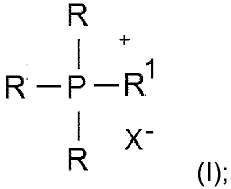 wherein each R is independently a C1-C6 alkyl group which is unsubstituted or substituted by a cyano, hydroxyl, esterified hydroxyl or aryl group; R1 represents a C8-C18 alkyl group which is linear or branched; and X represents either chlorine or bromine;
at least one quaternary ammonium cationic surfactant; and
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having vinylphosphonic acid and/or vinylidene-1, 1-diphosphonic acid monomers incorporated into the polymer or copolymer backbone, or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone.

In the invention the phosphonium quaternary surfactant compound is typically Tributyl tetradecyl phosphonium chloride (TTPC) which is a quaternary phosphonium biocide with a tetradecyl chain which causes the molecule to have surface-active properties.

The quaternary ammonium cationic surfactant biocide is typically alkyldimethylbenzylammonium chloride (ADBAC) and/or Didecyldimethylammonium chloride (DDAC).

The anionic polymer or copolymer biopenetrant is typically a vinylidene-diphosphonic acid terminated acrylic/sulphonate copolymer (VDPA copolymer

The compositions of the invention comprising the phosphonium quaternary surfactant compound, for example TTPC, and the biopenetrant with or without the quaternary ammonium cationic surfactant, may further comprise a tetrakis(hydroxyalkyl)phosphonium salt (THP salt), wherein the salt is selected from the group consisting of sulphate, phosphite, bromide, fluoride, chloride, phosphate, carbonate, acetate, formate, citrate, borate, and silicate. Preferably the tetrakis(hydroxyalkyl)phosphonium salt is THPS which is the sulphate salt. The THP salt is an additional biocide. When Quaternary ammonium cationic surfactant, which is a fast kill biocide, is present this allows the use of a quick kill/broad spectrum biocide with biofilm penetrating capabilities.

In the alternative there may be an absence of THP ammonium salts.

The composition may optionally further comprise an organic solvent such ethylene methanol, ethanol, ethylene glycol, isopropanol, sorbitol, Glycol Monobutyl Ether (EGMBE), various glycols. Or there may be an absence of organic solvent.

If desired there is an absence of sultaines, alcohol, glycols, ethers, glycerol, copolymer of N, N, N', N'-tetramethyl-1,2-diaminoethane with bis(2-chloroethyl)ether, known as WSCP, non-ionic surfactants, anionic surfactants, glutaraldehyde, oxazoilidine and / or acrolein.

The invention provides a method of treating a water system contaminated, or liable to contamination, with microorganisms selected from at least one of bacteria, fungi or algae, using a method that disrupts microorganism activity, e.g. it may disrupt bacterial activity. Produced water (and other water systems) may have significant organic and/or hydrocarbon components to them. Thus, the present invention also relates to the treatment of systems containing or not containing hydrocarbons. For example, the method may treat water to be used for hydraulic fracturing (fracking) or secondary recovery of oil and gas reservoirs or water used in hydrostat/pipeline testing applications or produced water.

The method therefore prevents or reduces the detrimental effects from the presence of active microorganisms, such as bacteria and archaea.

The synergistic composition may be a synergistic biocidal composition and/or a synergistic metal sulphide (e.g. iron sulphide) dissolving composition.

For purposes of this description all percentages and ratios are by weight unless otherwise indicated and all average molecular weights are weight average molecular weight unless otherwise indicated. Also, for purposes of this description the term wet basis means a water inclusive basis and the term dry basis means a water free basis. Based on actives means based on the weight of active ingredients. For example, in a solution of a polymer and solvent the polymer is the active ingredient.

The invention also provides the use of a composition comprising:
a phosphonium quaternary surfactant compound, wherein the phosphonium quaternary surfactant compound is a tetra alkyl phosphonium compound having a formula (I): 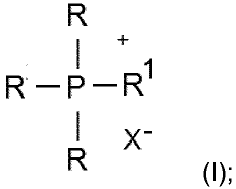 wherein each R is independently a C1-C6 alkyl group which is unsubstituted or substituted by a cyano, hydroxyl, esterified hydroxyl or aryl group; R1 represents a C8-C18 alkyl group which is linear or branched; and X represents either chlorine or bromine;
a biocidally active amount of at least one quaternary ammonium cationic surfactant; and
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having vinylphosphonic acid and/or vinylidene-1, 1-diphosphonic acid monomers incorporated into the polymer or copolymer backbone, or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone; and
optionally a biocidally active amount of a tetrakis(hydroxyalkyl)phosphonium salt, wherein the salt is selected from the group consisting of sulphate, phosphite, bromide, fluoride, chloride, phosphate, carbonate, acetate, formate, citrate, borate, and silicate;
for treating a water system contaminated, or liable to contamination, with microbes selected from at least one of bacteria, fungi and algae, thereby reducing population of the microorganisms by at least 90%.

In this use according to the invention, the composition may further comprise the tetrakis(hydroxyalkyl)phosphonium salt and dissolving metal sulphide scale and/or schmoo.

According to the invention, this use preferably allows reducing population of the microorganisms is by at least 99% if determined by ATP testing.

It is another object of the invention the use of a composition comprising:
a phosphonium quaternary surfactant compound, wherein the phosphonium quaternary surfactant compound is a tetra alkyl phosphonium compound having a formula (I): 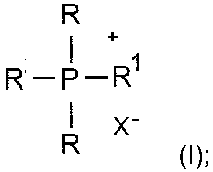 wherein each R is independently a C1-C6 alkyl group which is unsubstituted or substituted by a cyano, hydroxyl, esterified hydroxyl or aryl group; R1 represents a C8-C18 alkyl group which is linear or branched; and X represents either chlorine or bromine;
a biocidally active amount of at least one quaternary ammonium cationic surfactant; and
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone;
a biocidally active amount of a tetrakis(hydroxyalkyl)phosphonium salt, wherein the salt is selected from the group consisting of sulphate, phosphite, bromide, fluoride, chloride, phosphate, carbonate, acetate, formate, citrate, borate, and silicate; and
a biocidally active amount of a tetrakis(hydroxyalkyl)phosphonium salt (THP salt), wherein the salt is selected from the group consisting of sulphate, phosphite, bromide, fluoride, chloride, phosphate, carbonate, acetate, formate, citrate, borate, and silicate;
for treating a water system containing or in contact with a metal sulphide scale or schmoo, preferably iron sulphide scale, thereby dissolving at least part of the scale or schmoo.

In this use according to the invention, the water system treated may be a system for injection water for injection into a subterranean formation, a system for produced water produced by a subterranean formation, a cooling water system, or an industrial process water system and the population of the microorganisms may be reduced by at least 99% as determined by ASTM E645-18.

It is a further object of the present invention a composition comprising:
a phosphonium quaternary surfactant compound, wherein the phosphonium quaternary surfactant compound is a tetra alkyl phosphonium compound having a formula (I): 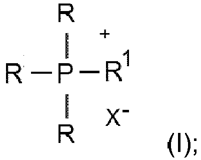 wherein each R is independently a C1-C6 alkyl group which is unsubstituted or substituted by a cyano, hydroxyl, esterified hydroxyl or aryl group; R1 represents a C8-C18 alkyl group which is linear or branched; and X represents either chlorine or bromine; and
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having vinylphosphonic acid and/or vinylidene-1, 1-diphosphonic acid monomers incorporated into the polymer or copolymer backbone, or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone.

It is thus a further object of the invention the use of a composition comprising:
a phosphonium quaternary surfactant compound, wherein the phosphonium quaternary surfactant compound is a tetra alkyl phosphonium compound having a formula (I): 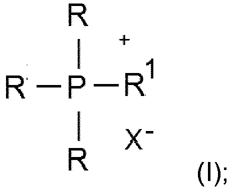 wherein each R is independently a C1-C6 alkyl group which is unsubstituted or substituted by a cyano, hydroxyl, esterified hydroxyl or aryl group; R1 represents a C8-C18 alkyl group which is linear or branched; and X represents either chlorine or bromine; and
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having vinylphosphonic acid and/or vinylidene-1, 1-diphosphonic acid monomers incorporated into the polymer or copolymer backbone, or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone;and
optionally a biocidally active amount of a tetrakis(hydroxyalkyl)phosphonium salt, wherein the salt is selected from the group consisting of sulphate, phosphite, bromide, fluoride, chloride, phosphate, carbonate, acetate, formate, citrate, borate, and silicate;
for treating a water system contaminated, or liable to contamination, with microbes selected from at least one of bacteria, fungi and algae, thereby reducing population of the microorganisms by at least 90%.

Also, the invention provides the use of a composition comprising:
a phosphonium quaternary surfactant compound, wherein the phosphonium quaternary surfactant compound is a tetra alkyl phosphonium compound having a formula (I): 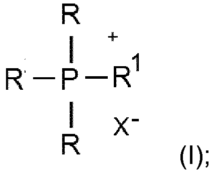 wherein each R is independently a C1-C6 alkyl group which is unsubstituted or substituted by a cyano, hydroxyl, esterified hydroxyl or aryl group; R1 represents a C8-C18 alkyl group which is linear or branched; and X represents either chlorine or bromine; and
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone;
a biocidally active amount of a tetrakis(hydroxyalkyl)phosphonium salt, wherein the salt is selected from the group consisting of sulphate, phosphite, bromide, fluoride, chloride, phosphate, carbonate, acetate, formate, citrate, borate, and silicate; and
a biocidally active amount of a tetrakis(hydroxyalkyl)phosphonium salt (THP salt), wherein the salt is selected from the group consisting of sulphate, phosphite, bromide, fluoride, chloride, phosphate, carbonate, acetate, formate, citrate, borate, and silicate;
for treating a water system containing or in contact with a metal sulphide scale or schmoo, thereby dissolving at least part of the scale or schmoo.

### BRIEF DESCRIPTION OF THE DRAWINGS

FIGS. 1A and 1B show vials containing, respectively, an example mixture of DDAC quaternary ammonium surfactant and TTPC as well as an example mixture of DDAC and water.
FIG. 2 shows a vial containing a mixture of TTPC, THPS, VDPA copolymer, DDAC quaternary ammonium surfactant, and Ethylene Glycol Monobutyl Ether (EGMBE) of an example specimen.
FIG. 3 shows photographs of samples of TPPC aqueous solution and an aqueous mixture of TTPC and VDPA copolymer acrylic/vinylsulfonate copolymer biopenetrant.
FIG. 4 shows a plot of percent biocidal efficiency for aqueous TTPC versus an aqueous mixture of TTPC and VDPA copolymer acrylic/vinylsulfonate copolymer biopenetrant.

### DETAILED DESCRIPTION OF THE PREFERRED EMBODIMENTS

### 1. Compositions

The present invention provides a biocidal composition comprising:
a phosphonium quaternary surfactant, wherein the phosphonium quaternary surfactant compound is a tetra alkyl phosphonium compound having a formula (I): 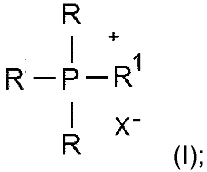 wherein each R is independently a C1-C6 alkyl group which is unsubstituted or substituted by a cyano, hydroxyl, esterified hydroxyl or aryl group; R¹ represents a C8-C18 alkyl group which is linear or branched, and
a biopenetrant, wherein the biopenetrant comprises a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having such VPA and/or VDPA monomers incorporated into the polymer or copolymer backbone or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone.

The present invention preferably provides a biocidal composition further comprising at least one quaternary ammonium cationic surfactant. Thus, the present invention preferably provides a biocidal composition further comprising:
a phosphonium quaternary surfactant, wherein the phosphonium quaternary surfactant compound is a tetra alkyl phosphonium compound having a formula (I): 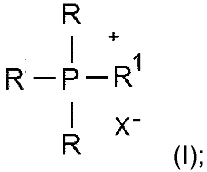 wherein each R is independently a C1-C6 alkyl group which is unsubstituted or substituted by a cyano, hydroxyl, esterified hydroxyl or aryl group; R¹ represents a C8-C18 alkyl group which is linear or branched,
at least one quaternary ammonium cationic surfactant; and
a biopenetrant, wherein the biopenetrant comprises a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having such VPA and/or VDPA monomers incorporated into the polymer or copolymer backbone or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone.

The compositions of the invention may optionally further comprise an additional biocide comprising a tetrakis(hydroxyalkyl)phosphonium salt, wherein the salt is selected from the group consisting of sulphate, phosphite, bromide, fluoride, chloride, phosphate, carbonate, acetate, formate, citrate, borate, and silicate, preferably THPS which is the sulphate salt.

The compositions of the present invention may include water due to water being added and/or due to water being used for as a carrier for an active ingredient, for instance when the active ingredient is added to the composition as an aqueous solution. In the compositions of the present invention, the typical wt. % ranges of the ingredients are as follows based on the total weight of the composition (this wt. % is relative to the total weight of the composition including water, if any water is present).

The compositions of the invention typically include 1 to 20 wt. %, preferably 2-10 wt. %, more preferably 3-8 wt. %, for example 5 wt. %, phosphonium quaternary surfactant.

The compositions of the present invention typically has 0.25 to 10 wt. %, typically 0.25 to 5 wt. % preferably 0.5 to 5 wt. % or 1 to 4 wt. %, the biopenetrant active ingredient, namely the polymer of an unsaturated carboxylic acid or a copolymer of an unsaturated carboxylic acid with an unsaturated sulphonic acid, or salts thereof, the polymer or copolymer being either terminated by vinylphosphonic acid (VPA) or vinylidene-1,1-diphosphonic acid (VDPA) or having vinylphosphonic acid (VPA) and/or vinylidene-1,1-diphosphonic acid (VDPA) monomers incorporated into the polymer or copolymer backbone. If the biopenetrant is added as a solution of active ingredient with water as an aqueous carrier the composition typically has 2.5 to 50 wt. %, preferably 5 to 20 wt. % biopenetrant solution. Typically there is a final loading/dilution of 0.001 wt.% - 0.5 wt.% of the biopenetrant active ingredient into the water to be injected.

The compositions of the present invention typically have 0 to 30 wt. %, quaternary ammonium cationic surfactant. The compositions of the present invention preferably have 0.5 to 30 wt. %, more preferably 0.5-20 wt. %, most preferably 1-15 wt. % or typically 1-10 wt. % or 5-10 wt. % quaternary ammonium cationic surfactant. If the quaternary ammonium cationic surfactant is added as a solution of active ingredient with water as an aqueous carrier the composition typically has 2 to 60 wt. %, preferably 2 to 30 wt. %, more preferably 4 to 20 wt. %, and most preferably 6 to 12 wt. % quaternary ammonium cationic surfactant solution.

Optionally, the compositions of the invention may further include one or more additional biocides.

The compositions may include 0 to 50 wt. % preferably 15 to 50 wt. %, more preferably 15 to 25 wt. %, for example 20 wt.%, tetrakis(hydroxyalkyl)phosphonium salt (THP salt) biocide, wherein the salt is selected from the group consisting of sulphate, phosphite, bromide, fluoride, chloride, phosphate, carbonate, acetate, formate, citrate, borate, and silicate. The THP salt may be added as a solution of active ingredient with water as an aqueous carrier, for example THPS 75 which is a solution of 75 wt. % THPS in an aqueous carrier. If the THP salt is added as a solution of active ingredient with water as an aqueous carrier the composition typically has 13 to 80 wt. % of this solution. If the composition contains quaternary ammonium cationic surfactant and THP salt, then typically the composition has 5-20 wt. %, more typically 5-13 wt. %, quaternary ammonium cationic surfactant.

However, there may be an absence of additional biocide.

Typically the composition has 50-80 wt. active ingredients (this is the total phosphonium quaternary surfactant, biopenetrant, quaternary ammonium cationic surfactant, and THP salt (if present). For example, the solutions typically contain 0.5-20 wt. %, more typically 1-10 wt. %, further typically 5-10 wt. %, quaternary ammonium cationic surfactant on an active ingredient basis. The remainder is optional additives and carrier, preferably the carrier is water.

When the composition has no quaternary ammonium cationic surfactant the composition has 2.5-20 wt.% active ingredients (this is the total phosphonium quaternary surfactant, biopenetrant, and THP salt (if present). For example, the solutions typically contain 0.5-20 wt. %, more typically 1-10 wt. %, further typically 5-10 wt. %, quaternary ammonium cationic surfactant on an active ingredient basis. The remainder is optional additives and carrier, preferably the carrier is water

Optionally, the composition may further include one or more additives such as defoamer (anti-foaming agent), chelating agents, acid corrosion inhibitors and amino acid stabilizers. However, there may be an absence of any one or more of these ingredients.

The composition may optionally further comprise an organic solvent such ethylene methanol, ethanol, ethylene glycol, isopropanol, sorbitol, Glycol Monobutyl Ether (EGMBE), various glycols. Or there may be an absence of organic solvent.

The balance, if any, is typically carrier such as water.

If desired there is an absence of sultaines, alcohol, glycols, ethers, glycerol, copolymer of N, N, N', N'-tetramethyl-1,2-diaminoethane with bis(2-chloroethyl)ether, known as WSCP, non-ionic surfactants, anionic surfactants, glutaraldehyde, oxazoilidine and / or acrolein.

### Quaternary Phosphonium Cationic Surfactant Compounds

Typically the phosphonium quaternary surfactant compound is a tetra alkyl phosphonium compound having a formula (I): 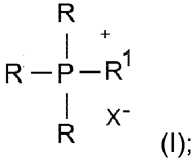 wherein each R is independently a C1-C6 alkyl group which is linear or branched; R¹ represents a C8-C18 alkyl group which is linear or branched; and X represents either chlorine or bromine.

Suitably, each R is a C1-C6 alkyl group. Typically, each R is a C1-C4 alkyl or C3-C5 alkyl group, typically a butyl group.

Suitably R¹ represents a C8-C18 alkyl group. Suitably, R¹ is a C12-C16 alkyl group. Suitably, R¹ is a tetradecyl group.

Suitably, X is chlorine.

Suitably, the method employs a phosphonium quaternary surfactant compound (a) which is a phosphonium chloride.

A preferred phosphonium quaternary surfactant compound is tributyl-tetradecylphosphonium chloride (TTPC) which has the formula (II):

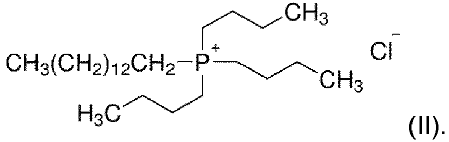

### Quaternary Ammonium Cationic Surfactant

Quaternary ammonium cationic surfactants are generally known and include for example, mono-cationic surfactants according to formula (III): 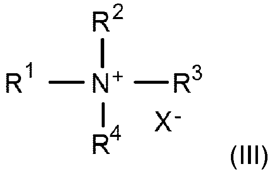 wherein:
R¹, R², R³, and R⁴ are each independently an organic group; preferably R¹ and R² are an aryl or alkaryl group (typically benzyl) or C₈ to C₃₀ alkyl group; preferably R³ and R⁴ are an aryl or alkaryl group (typically benzyl) or a C₁ to C₃₀ alkyl group, more preferably a C₁ to C₁₆ alkyl group; and
X⁻ is an anion, typically a chloride, bromide, methosulfate, ethosulfate, lactate, saccharinate, acetate or phosphate anion.

More preferably, R¹ is a C₈-C₁₈ alkyl group, an aryl group, or an alkaryl group of an aryl group and a C₁-C₄ alkene group (typically the alkaryl is benzyl); R² is C₈-C₁₈ alkyl; R³ is C₁-C₄ alkyl; and R⁴ is C₁-C₄ alkyl.

Examples of suitable quaternary ammonium cationic surfactant compounds of the monoalkyl amine derivative type include: cetyl trimethyl ammonium bromide (also known as CETAB or cetrimonium bromide), cetyl trimethyl ammonium chloride (also known as cetrimonium chloride), myristyl trimethyl ammonium bromide (also known as myrtrimonium bromide or Quaternium-13), stearyl dimethyl benzyl ammonium chloride (also known as stearalkonium chloride), oleyl dimethyl benzyl ammonium chloride, (also known as olealkonium chloride), lauryl/myristryl trimethyl ammonium methosulfate (also known as cocotrimonium methosulfate), cetyl dimethyl (2)hydroxyethyl ammonium dihydrogen phosphate (also known as hydroxyethyl cetyldimonium phosphate), cocotrimonium chloride, distearyldimonium chloride, wheat germ-amidopropalkonium chloride, stearyl octyldimonium methosulfate, isostearaminopropalkonium chloride, dihydroxypropyl PEG-5 linoleaminium chloride, PEG-2 stearmonium chloride, Quaternium 18, Quaternium 80, Quaternium 82, Quaternium 84, behentrimonium chloride, dicetyl dimonium chloride, behentrimonium methosulfate, tallow trimonium chloride and behenamidopropyl ethyl dimonium ethosulfate. Mixtures may also be used in the present invention.

Quaternary ammonium compounds of the dialkyl amine derivative type include, for example, distearyldimonium chloride, dicetyl dimonium chloride, stearyl octyldimonium methosulfate, dihydrogenated palmoylethyl hydroxyethylmonium methosulfate, dipalmitoylethyl hydroxyethylmonium methosulfate, dioleoylethyl hydroxyethylmonium methosulfate, hydroxypropyl bisstearyldimonium chloride, and mixtures thereof.

Typical quaternary ammonium cationic surfactants comprise branched and/or unsaturated cationic surfactants such as olealkonium chloride, long chain cationic surfactants such as stearalkonium chloride and behentrimonium chloride, as well as mixtures thereof.

Suitable anionic counterions for the quaternary ammonium cationic surfactant include, for example, chloride, bromide, methosulfate, ethosulfate, lactate, saccharinate, acetate and phosphate anions.

The quaternary ammonium cationic surfactant may for example be a dodecyl trimethyl ammonium salt.

The quaternary ammonium cationic surfactant may for example be Benzalkonium salts having one 8 to 20 C alkyl group and two 1 to 4 carbon alkyl groups linked to its quaternary nitrogen atom, and a benzyl group. A preferred Benzalkonium salt is Benzalkonium chloride, also known as BZK, BKC, BAC, alkyldimethylbenzylammonium chloride or ADBAC, is a type of cationic surfactant. It is an organic salt classified as a quaternary ammonium compound. In industry it has three main categories of use: as a biocide, a cationic surfactant, and as a phase transfer agent. ADBACs are a mixture of alkylbenzyldimethylammonium chlorides, in which the alkyl group has various even-numbered alkyl chain lengths as seen in Formula (IV). 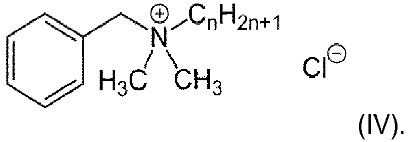 wherein n= 8, 10, 12, 14, 16, 18, for example it may use C₁₂ (70%) and C₁₄ (30%) as alkyl chain.

Preferred quaternary ammonium cationic surfactants are ADBAC (Alkyl Dimethyl Benzyl Ammonium Chloride) and/or DDAC (didecyldimethyl ammonium chloride).

The invention may have an absence of N-alkyl pyridinium, alkyl imidazoline or quaternized imidazoline salts, amido amines such as those formed by reacting a fatty acid having 2 to 22 carbon atoms or an ester, glyceride or similar amide forming derivative thereof, with a di or poly amine, such as, for example, ethylene diamine or diethylene triamine, in such a proportion as to leave at least one free amine group, quaternized amido amines, and alkyl phosphonium and hydroxyalkyl phosphonium salts having one C₈-₂₀ alkyl group and three C₁₋₆ alkyl or hydroxyalkyl groups.

### Biopenetrant

The biopenetrant comprises a polymer of an unsaturated carboxylic acid or a copolymer of an unsaturated carboxylic acid with an unsaturated sulphonic acid, or salts thereof, the polymer or copolymer being either terminated by vinylphosphonic acid (VPA) monomer or vinylidene-1, 1-diphosphonic acid (VDPA) monomer or having such vinylphosphonic acid and/or vinylidene-1, 1-diphosphonic acid monomers incorporated into the polymer or copolymer backbone. For example, the biopenetrant may be a random copolymer incorporating vinylphosphonic acid and/or vinylidene-1, 1-diphosphonic acid monomers into the copolymer backbone.

The polymer or copolymer of the biopenetrant may be an acrylic polymer or an acrylic/vinylsulphonic copolymer being either terminated by vinylphosphonic acid (VPA) monomer or vinylidene-1, 1-diphosphonic acid (VDPA) monomer or having such vinylphosphonic acid and/or vinylidene-1, 1-diphosphonic acid monomers incorporated into the polymer or copolymer backbone. An acrylate is a salt of an acrylic acid. A sulfonate is a salt of sulfonic acid. Typical salt forms of acrylate and sulfonate are any one or more of alkali metals, for example, sodium salts and potassium salts, and esters. Typical esters are linear or branched C1-C4 alkyl esters, for example methyl or ethyl esters.

Acrylic acid monomeric units and/or acrylate monomeric units are both considered acrylic monomeric units. Thus, by acrylic polymer is meant a polymer or copolymer containing acrylic acid monomeric units and/or acrylate monomeric units. Thus, polyacrylic acid (PAA) and polyacrylate (PA) are both forms of acrylic polymer.

Vinylsulfonic acid monomeric units and/or vinylsulfonate monomeric units are both considered vinylsulphonic monomeric units. Thus, by acrylic/vinylsulphonic copolymer is meant a polymer or copolymer containing acrylic acid monomeric units and/or acrylate monomeric units as well as vinylsulphonic acid monomeric units and/or vinylsulphonate monomeric units. Thus, for example, the polymer or copolymer may be, respectively, a polyacrylate or an acrylate/vinylsulphonate copolymer.

The polymer or copolymer of the biopenetrant may be in the protonated or deprotonated form (meaning acid or salt form, respectively) depending upon pH of the composition in which it is contained or the water system it is treating. Typical water systems being treated have a pH of 3 to 6 or 3.5 to 5.5. The pH of the composition or system can affect the equilibrium balance between how much acid form vs. how much salt form is present. For example at pH of 2 - 4, the polymer or copolymer is likely in the acid form.

Thus, the biopenetrant may be one or more of:
A. an acrylic polymer terminated with vinylphosphonic acid (a "VPA end-capped polymer"), for example, a polyacrylic acid polymer terminated with VPA and/or a polyacrylate terminated with VPA;
B. an acrylic/vinylsulphonic copolymer terminated with vinylphosphonic acid (a "VPA end-capped polymer"), for example, an acrylic acid/vinylsulphonic acid copolymer terminated with VPA, an acrylic acid/vinylsulphonate copolymer terminated with VPA, an acrylate/vinylsulphonic acid copolymer terminated with VPA, and/or an acrylate/vinylsulphonate copolymer terminated with VPA;
C. an acrylic polymer terminated with vinylidene-1, 1-diphosphonic acid (a "VDPA end-capped polymer"), for example, a polyacrylic acid polymer terminated with VDPA and/or an polyacrylate terminated with VDPA;
D. an acrylic/vinylsulphonic copolymer terminated with vinylidene-1, 1-diphosphonic acid (a "VDPA end-capped polymer"), for example, an acrylic acid/vinylsulphonic acid copolymer terminated with VDPA, an acrylic acid/vinylsulphonate copolymer terminated with VDPA, an acrylate/vinylsulphonic acid copolymer terminated with VDPA, and/or an acrylate/vinylsulphonate copolymer terminated with VDPA,
E. an acrylic polymer incorporating VPA and/or VDPA monomers into the polymer backbone, for example, a polyacrylic acid polymer incorporating VPA and/or VDPA monomers into the polymer backbone and/or an polyacrylate incorporating VPA and/or VDPA monomers into the polymer backbone;
F. an acrylic/vinylsulphonic copolymer incorporating VPA and/or VDPA monomers into the copolymer backbone, for example an acrylic acid/vinylsulphonic acid copolymer incorporating VPA and/or VDPA monomers into the copolymer backbone, an acrylic acid/vinylsulphonate copolymer incorporating VPA and/or VDPA monomers into the copolymer backbone, an acrylate/vinylsulphonic acid copolymer incorporating VPA and/or VDPA monomers into the copolymer backbone, and/or an acrylate/vinylsulphonate copolymer incorporating VPA and/or VDPA monomers into the copolymer backbone.

Preferably the biopenetrant is acrylic/vinylsulfonate copolymer. Preferably the biopenetrant is VDPA end-capped copolymer. More preferably the biopenetrant is the VDPA end-capped acrylate/vinylsulphonate copolymer.

The acrylic polymer terminated with vinylphosphonic acid and the acrylic/vinylsulphonate copolymer terminated with vinylphosphonic acid are both hereinafter termed "VPA end-capped polymer". The VPA end-capped copolymer biopenetrant has a weight average molecular weight of 1000 to 15000 g/mol, typically 1000 to 12000 g/mol, for example, 3000 to 6000 g/mol, more typically in the range of 5000 to 6000 g/mol. The VPA end-capped polymer biopenetrant is typically a vinylphosphonic acid-terminated polyacrylate.

The acrylic polymer terminated with vinylidene-1, 1-diphosphonic acid and the acrylic/vinylsulphonate copolymer terminated with vinylidene-1, 1-diphosphonic acid are both hereinafter termed "VDPA end-capped polymer". The "VDPA end-capped polymer" biopenetrant has a weight average molecular weight of 1000 to 15000 g/mol, typically 1000 to 12000 g/mol, for example, 3000 to 6000 g/mol, more typically in the range of 5000 to 6000 g/mol. The VDPA end-capped polymer biopenetrant is typically an acrylate/vinylsulphonate copolymer terminated with vinylidene-1, 1-diphosphonic acid. Most typically the "VDPA end-capped copolymer" biopenetrant is a random copolymer of acrylic monomer and vinyl sulfonic monomer, preferably VSA (vinyl sulphonate) monomers and AA (acrylic acid) or acrylate monomers, with a VDPA endcap.

Formula (VI) shows such a random copolymer of acrylic monomer and vinyl sulfonic monomer with a VPA end-cap or a VDPA endcap. 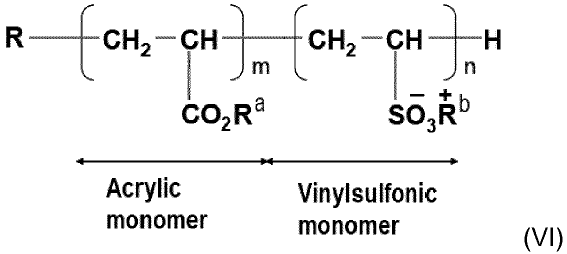 wherein R is a VPA or VDPA endcap, R^{a} is selected from the group of H, Na, K, and linear or branched C1-C4 alkyl, and R^{b} is selected from the group of H, Na, K, and linear or branched C1-C4 alkyl.

Formula (Via) shows such a random copolymer of acrylic acid (AA) and vinyl sulphonate wherein R is a VPA or VDPA endcap.

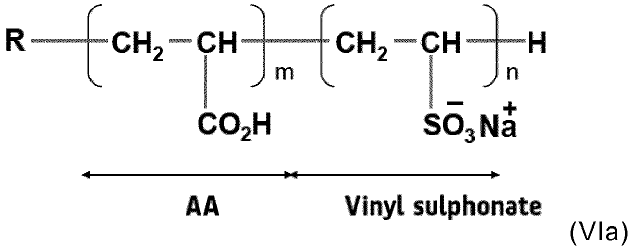

In the biopenetrant structures (III) and (IIIa) if R is a vinylphosphonic acid monomer, namely the VPA end-cap, then the copolymer is a "VPA end-capped polymer". In the biopenetrant structures (I) and (Ia) if R is a vinylidene-1, 1-diphosphonic acid monomer, namely the VDPA end-cap, then the copolymer is a "VDPA end-capped polymer".

In biopenetrant structure (VII) and (VIIa) m and n are sufficient to achieve the above-described molecular weights for "VPA end-capped polymer" and "VDPA end-capped polymer".

In biopenetrant structure (VII) the molar ratio of acrylic monomer to vinylsulfonic acid monomer is typically 20-80:80-20, preferably 30-70:70:30, more preferably about 40-60:60-40.

In biopenetrant structure (VIIa) the molar ratio of VSA (vinyl sulphonate monomer) to AA (acrylic acid monomer) is typically 20-80:80-20, preferably 30-70:70:30, more preferably about 40-60:60-40. This ratio also applies if the acrylate monomer is present rather than AA.

The acrylic polymer or acrylic/vinylsulphonic copolymer biopenetrant incorporating VPA and/or VDPA monomers has a weight average molecular weight of 1000 to 15000 g/mol, typically 1000 to 12000 g/mol, for example, 3000 to 6000 g/mol, more typically in the range of 5000 to 6000 g/mol. Typically the acrylic polymer acrylic/vinylsulphonic copolymer biopenetrant incorporating VPA and/or VDPA monomers is an acrylic/vinylsulphonate copolymer incorporating the VPA and/or VDPA monomers.

### THP Salt Biocide

The THP salts include the tetrakis(hydroxymethyl) phosphonium salts are any one or more of the sulphate, chloride, phosphite, bromide, fluoride, phosphate, carbonate, acetate, formate, citrate, borate, and silicate salts. Preferably, the THP salt is tetrakis(hydroxymethyl)phosphonium sulphate (THPS), or tetrakis(hydroxymethyl) phosphonium chloride (THPC). However, the phosphite, bromide, fluoride, phosphate, carbonate, acetate, formate, citrate, borate, and silicate THP salts are also suitable biocides. THPC has the formula (HOCH₂)₄PCl.

THP salt is a phosphonium quaternary compound but is different than the above-described quaternary phosphonium cationic surfactant compounds. The THP salt is not a surfactant. Thus, when the THP salt and the above-described quaternary phosphonium cationic surfactant compound are present there are two categories of quaternary phosphonium compounds present.

### Solvents

Organic solvents are optional but may be used in, for example, winterized formulations. Typical formulations will include water. The winterized formulations will typically include, instead of water or in addition to water, organic solvents such as methanol, isopropanol, ethanol, ethylene glycol, sorbitols, other glycols, ethylene glycol monobutyl ether (EGMBE), and combinations thereof.

### Forms of the composition

The composition may, in one embodiment, be provided in the form of a solution, for example an aqueous solution.

Alternatively the composition may be supplied as a solid, for example a solid formed by coating the components onto, or absorbing the components into, a powdery granular or porous acid substrate such as adipic acid or by incorporation into a waxy substrate.

As noted above, the compositions according to the present invention may be used as biocides against planktonic (free-swimming) bacteria, sessile (attached) bacteria, general heterotrophic bacteria, acid producing bacteria, sulphate reducing bacteria and archaea.

### Methods of using the composition of the invention

The invention provides a method of treating a water system contaminated, or liable to contamination, with microorganisms selected from at least one of bacteria, archaea, fungi or algae, which method comprises adding to the system separately or together,
a phosphonium quaternary surfactant compound having a formula (I): 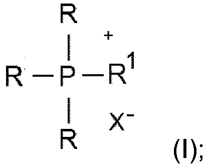 wherein each R is independently a C1-C6 alkyl group which is unsubstituted or substituted by a cyano, hydroxyl, esterified hydroxyl or aryl group; R¹ represents a C8-C18 alkyl group which is linear or branched; and X represents either chlorine or bromine: and
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having vinylphosphonic acid and/or vinylidene-1, 1-diphosphonic acid monomers incorporated into the polymer or copolymer backbone, or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone;and
thereby reducing population of the microorganisms by at least 90%.

In other words, the invention also provides the use of such a above described composition for treating a water system contaminated, or liable to contamination, with microbes selected from at least one of bacteria, fungi and algae, thereby reducing population of the microorganisms by at least 90%.

Preferably the compositions used in the method/use of the present invention further comprise a biocidally active amount of at least one quaternary ammonium cationic surfactant. Thus, the invention preferably provides a method of treating a water system contaminated, or liable to contamination, with microorganisms selected from at least one of bacteria, archaea, fungi or algae, which method comprises adding to the system separately or together,
a phosphonium quaternary surfactant compound having a formula (I): 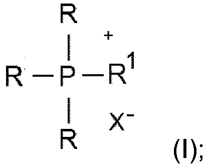 wherein each R is independently a C1-C6 alkyl group which is unsubstituted or substituted by a cyano, hydroxyl, esterified hydroxyl or aryl group; R¹ represents a C8-C18 alkyl group which is linear or branched; and X represents either chlorine or bromine,
a biocidally active amount of at least one quaternary ammonium cationic surfactant: and
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having vinylphosphonic acid and/or vinylidene-1, 1-diphosphonic acid monomers incorporated into the polymer or copolymer backbone, or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone; and
thereby reducing population of the microorganisms by at least 90%.

In other words, the invention also provides the use of such a above described composition for treating a water system contaminated, or liable to contamination, with microbes selected from at least one of bacteria, fungi and algae, thereby reducing population of the microorganisms by at least 90%.

The composition used in this method/use optionally further comprises a biocidally active amount of a biocide comprising a tetrakis(hydroxyalkyl)phosphonium salt (THP salt), wherein the salt is selected from the group consisting of sulphate, phosphite, bromide, fluoride, chloride, phosphate, carbonate, acetate, formate, citrate, borate, and silicate.

The ingredients used in the method/use (for example, phosphonium quaternary surfactant, biopenetrant, ammonium quaternary cationic surfactant, and optionally THP salt) being any of the above described ingredients of the compositions of the present invention.

ATP testing is performed to determine the microorganism population. Adenosine triphosphate (ATP) molecule is in all living cells. In the presence of luciferin substrate and luciferase enzyme, ATP dependent oxidation of luciferin produces oxyluciferin, CO2, AMP, inorganic phosphate and light. The quantity of generated light is proportional to the amount of ATP present, thus, the light units can be measured to estimate the biomass of cells in a sample. ATP tests allow simple and rapid measurement of all kind of the microbiological organisms in the sample with reproducible results. ATP content of the cells is related to the homeostatic regulation and thus relatively constant in living cells. When a cell died intracellular ATP is reduced by ATPases and ATP levels are decreased quickly. Biocide efficacy is assessed by determination of total ATP and free ATP concentrations in both biofilm and bulk water samples using ATP bioluminescence swabs. Total ATP tests measure both the ATP that is bound up within living cells as well as ATP that is floating free in the water. Free ATP tests measure only the ATP floating free outside of living cells. The microbial ATP concentration is determined by the difference between total and free ATP. Monitoring of total and free ATP levels during biocidal treatment is employed to indicate the efficiency of the clean-up effort and help determine the appropriate scheduling to maximize the biocidal activity.

In the ATP test microorganism concentration is based on concentration of ATP/mL which is converted from relative light units. To measure the amount of ATP in a sample containing viable cells, the cells are first ruptured by addition of a lysing agent. This releases all the contents, including ATP, into solution. Additional reagents (luciferin and luciferase) are added to the solution and the amount of light produced is measured in a luminometer. The luminometer displays the number of Relative Light Units (RLUs) for that solution. Microorganisms found on surfaces need to be scrapped or swabbed off those surfaces and then treated in a similar fashion as the solution sample. The RLUs determined for a sample are relative to the mass of the cells in that tested sample rather than the number of cells per ml.

The ATP test uses cATP (cellular ATP) indicator, which isolates the living biomass and in turn provides accuracy in detecting total living biomass concentration. A typical ATP testing kit is available from LuminUltra.

To determine the percentage of reduction of the population of microorganisms in the water system contaminated, or liable to contamination, a first sample of the water system is collected before treatment with the synergistic biocide composition according to the invention and the corresponding microorganisms population is quantified using ATP test, providing a first result F0 in Relative Light Units (RLUs), then another sample of the water system is collected after treatment with the synergistic biocide composition according to the invention and the corresponding microorganisms population is quantified using ATP test, providing a second result F1 in Relative Light Units (RLUs). The percentage of reduction of the population of microorganisms is calculated according to the following equation: (F0-F1)/100. Also, typically a control (untreated sample) is grown alongside the treated sample. That way all of the growth times, temperatures, and variables are the same. Typically sampling is done at 1 hour, 3 hours and 24 hours, and 1 week.

The water system may or may not contain hydrocarbons. Produced water (and other water systems) may have significant organic and/or hydrocarbon components to them. However, the liquid of the water systems being treated is predominantly water. Thus, the liquid is over 50 wt. % water, more typically over 80 wt. % water, further more typically over 95 wt. % water.

The biocidally active amount will be dependent on the amount of microorganism, e.g., bacteria, type of microorganism, e.g., bacteria, water type (salinity, pH, temperature, etc.).

The term biocidally active amount of an ammonium quaternary cationic surfactant means that there is sufficient ammonium quaternary cationic surfactant to reduce the population of (kill) at least some microorganisms, e.g., bacteria, not only in the presence of the THP salt but even in the absence of THP salt.

The term biocidally active amount of a THP salt means that there is sufficient THP salt to reduce the population of (kill) at least some microorganisms, e.g., bacteria, not only in the presence of the ammonium quaternary cationic surfactant but even in the absence of ammonium quaternary cationic surfactant.

For the ammonium quaternary cationic surfactant the biocidally effective amount will typically be 1-15 ppm (average is 5-8 ppm). For example, dosing 0.25 gpt (gallons per thousand gallons) of a 5 wt. % (active ingredient) ammonium quaternary cationic surfactant, typically results in a dose in the water treatment system of about 12.5 ppm).

For the THP salt the biocidally effective amount will typically be 5-30 ppm if dosed as a continuous injection. In a batch treatment, the biocidally effective amount will typically be 50 - 100 ppm. However, in hydraulic fracking the dose of the THP salt biocide is typically 125 - 250 ppm.

The amount (dosage) of total composition of the present invention delivered to the water system to treat the water system in the field will depend on the quality of the system to be treated. However, in general the total dosage of the phosphonium quaternary surfactant, biopenetrant, quaternary ammonium cationic surfactant and optional THP salt in the water system ranges from 10 to 100 ppm, preferably 25 to 100 ppm. Typically this dosage contains at least 0.5 ppm, preferably at least 1 ppm, quaternary phosphonium cationic surfactant. Typically this dosage contains at least 1 ppm, preferably at least 2 ppm, quaternary ammonium cationic surfactant. Preferably this dosage contains at least 5 ppm, more preferably at least 10 ppm, THP salt.

The total amount of ammonium quaternary cationic surfactant alone or with optional THP salt is preferably sufficient for reducing the microorganism, e.g., bacteria, population by at least 90%, more preferably by at least 99%, for example at least 99.9% or 99.99% of the microorganisms. The reduction can be within any suitable time after administering the dosage, for example, within 1 hour, 3 hours, 24 hours, or 1 week after administering the dosage. However, preferably the reduction is achieved within 24 hours after administering the dosage. If the dosage is administered as a single dose then this % reduction is preferably within 24 hours after administering the single dose. If the dosage is administered by multiple administrations then this % reduction is preferably the reduction achieved within 24 hours after administering the last portion of the dose. The 90% reduction is also known as a 1-log reduction in the microorganism count. This 99.99% reduction is also known as a 4 log reduction in the microorganism count. The reduction in the microorganisms population count can be detected by any analytical method (ATP, MPN, qPCR, etc.) that can measure microorganism count in the water system being tested. The ATP test described above is the adenosine triphosphate test which is a bioluminescence test using bacterial produced ATP. The MPN test is the Most Probable Number test which is a microorganism counting method based on serial dilution and bug bottles and/or petri dish plating methods, and qualitative (sometimes real time -RT). The qPCR test is the Polymerase Chain Reaction test which is a genetic based method to identify specific genetic sequences present in a sample. However, for the present invention the standard test to measure microorganism population is the above-described ATP test.

For cooling water systems reduction in microorganism population by the invention is determinable according to ASTM E645-18 Standard Practice for Evaluation of Microbicides Used in Cooling Water Systems which states, "The investigator will determine the minimal microbiocide threshold concentration for effectiveness based on customer requirements or specific registration needs. In most cases, a 90% kill or 1-log reduction would be the minimum level of performance." ASTM E1839-13 Standard Test Method for Efficacy of Slimicides for the Paper Industry-Bacterial and Fungal Slime recommends a 2 log reduction, or 99%.

The invention therefore also provides a method of treating a water system contaminated, or liable to contamination, with microorganisms such as at least one of bacteria, archaea, fungi or algae, which method comprises adding to said system separately or together the ingredients of compositions of the present invention. If the ingredients are added to the water system separately they are added close enough in time to form the compositions of the present invention in situ in the water system, thereby killing, or controlling the activity of, at least some of said microorganisms. The invention therefore also provides a method of treating a water system against planktonic (free-swimming) and/or sessile (attached) bacteria or archaea. The method of treating may kill, or control the activity of, at least some general heterotrophic bacteria, acid producing bacteria, sulphate reducing bacteria or archaea in water. The invention therefore also provides the use of the above compositions according to the invention for treating a water system against planktonic (free-swimming) and/or sessile (attached) bacteria or archaea. The treatment may kill, or control the activity of, at least some general heterotrophic bacteria, acid producing bacteria, sulphate reducing bacteria or archaea in water.

The water system may, for instance, be contaminated with bacterial slime and/or planktonic bacteria. The invention may be of use for treating aerobic systems such as cooling towers, paper processing systems and waste water systems. The invention may also be suitable for use in anaerobic systems, such as oil wells, oil processing and injection systems e.g. during secondary recovery, and the transportation and storage of oilfield waters and crude oil. The invention may also be suitable for use in the preservation of slurries and functional fluids, such as drilling muds, completion fluids, stimulation fluids and fracturing fluids.

The invention also provides a method of treating a water system containing or in contact with a metal sulphide (typically metal sulphide scale), or schmoo containing metal sulphides which method comprises adding to the system separately or together,
a phosphonium quaternary surfactant compound having a formula formula (I): 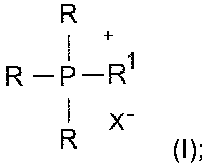 wherein each R is independently a C1-C6 alkyl group which is unsubstituted or substituted by a cyano, hydroxyl, esterified hydroxyl or aryl group; R¹ represents a C8-C18 alkyl group which is substituted or unsubstituted; and X represents either chlorine or bromine,
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having vinylphosphonic acid and/or vinylidene-1, 1-diphosphonic acid monomers incorporated into the polymer or copolymer backbone, or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone;and
optionally a biocidally active amount of a THP salt;
and
thereby dissolving at least part of the scale or schmoo.

The invention also provides the use of the above composition for treating a water system containing or in contact with a metal sulphide (typically metal sulphide scale), or schmoo containing metal sulphides, thereby dissolving at least part of the scale or schmoo.

Preferably the composition for treating a water system containing or in contact with a metal sulphide (typically metal sulphide scale), or schmoo containing metal sulphides further comprises a biocidally active amount of at least one ammonium quaternary cationic surfactant. Thus, the invention also provides a method of treating a water system containing or in contact with a metal sulphide (typically metal sulphide scale), or schmoo containing metal sulphides which method comprises adding to the system separately or together,
a phosphonium quaternary surfactant compound having a formula formula (I): 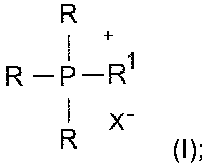 wherein each R is independently a C1-C6 alkyl group which is unsubstituted or substituted by a cyano, hydroxyl, esterified hydroxyl or aryl group; R¹ represents a C8-C18 alkyl group which is substituted or unsubstituted; and X represents either chlorine or bromine,
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having vinylphosphonic acid and/or vinylidene-1, 1-diphosphonic acid monomers incorporated into the polymer or copolymer backbone, or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone;
a biocidally active amount of at least one ammonium quaternary cationic surfactant; and
optionally a biocidally active amount of a THP salt;
and
thereby dissolving at least part of the scale or schmoo.

In other words, the invention also provides the use of such a above described composition for treating a water system containing or in contact with a metal sulphide (typically metal sulphide scale), or schmoo containing metal sulphides, thereby dissolving at least part of the scale or schmoo.

Schmoo is a solid phase consisting of hydrocarbons and mineral scale and at least 5% iron sulphide. It is a slimy, oily material, composed mainly by crude solids stabilized by FeS. It comprises FeS particles surrounded by an organic/hydrocarbon substance.

The ingredients used in the method/use (for example, phosphonium quaternary surfactant, biopenetrant, ammonium quaternary cationic surfactant, and optionally THP salt) being any of the above described ingredients of the compositions of the present invention.

As mentioned above, the compositions according to the present invention may also be used to dissolve metal sulphides, preferably iron sulphide; in particular they may be used to dissolve iron sulphide scale. However, the metal sulphide may be lead sulphide or zinc sulphide or a combination of iron or lead and zinc sulphides, or be present within a schmoo organic matrix. The iron sulphide may typically be Mackinawite, Greigite (Fe₃S₄) troilite (FeS) or pyrite (FeS₂), but any iron sulphide species can be dissolved using the invention. The compositions of the invention effective as FeS dissolvers include THP salt, preferably THPS. A preferred composition effective as a FeS dissolver includes TTPC, THPS and the quaternary ammonium cationic surfactant.

The amount of composition of the present invention delivered to the water system is such to treat the water system with the sum of the total of phosphonium quaternary surfactant compound, biopenetrant polymer or copolymer, quaternary ammonium cationic surfactant and optional THP salt dosage of this formulation in the field will depend on the quality of the system to be treated but in general ranges from 10 to 100 ppm, preferably 25 to 100 ppm. Typically this dosage contains at least 0.5 ppm, preferably at least 1 ppm, quaternary phosphonium surfactant compound. Typically this dosage contains at least 1 ppm, preferably at least 2 ppm, quaternary ammonium cationic surfactant. Preferably this dosage contains at least 5 ppm, preferably at least 10 ppm, THP salt.

The invention thus also provides a method of treating a water system containing or in contact with a metal sulphide scale, for example an iron sulphide scale, which method comprises adding to the system separately or together the ingredients of any of the compositions of the present invention thereby dissolving at least part of the scale. If applied separately the ingredients are applied near enough in time to form the mixture of a composition of the present invention in situ in the water system.

The invention may be of use in the oil and gas industry, for treating systems such as oil wells, gas wells, injection, reinjection or disposal wells, pipelines, storage vessels and production equipment, e.g. during secondary recovery, and in other industrial water systems, for instance in paper industry systems.

Typically, the invention may be of use in oil and gas production and extraction which comprises injection and produced water, source water and aquifer water for waterflooding and hydraulic fracturing, pond water, holding tank water, functional fluids, drilling muds, completion and workover fluids, hydrotest fluids, stimulation fluids, packer fluids, fracturing fluids, oil and gas wells, separation, storage and transportation systems, oil and gas pipelines, oil and gas vessels, or fuel.

The invention may be of use in water systems for cooling water, air washer, heat exchangers, boiler water, pulp and paper mill water, other industrial process water, ballast water, wastewater, metalworking fluids, latex, paint, coatings, adhesives, inks, tape joint compounds, pigment, water-based slurries, membrane and filtration systems, textiles, leather and leather production system, or a system used therewith.

The present invention will be illustrated by way of the following examples.

In the examples, the various abbreviations have the following meaning.
- ADBAC: ammonium quaternary cationic surfactant (alkyldimethylbenzylammonium chloride)
- DDAC: Didecyldimethylammonium chloride (DDAC) which is an 80% solution of Didecyldimethylammonium chloride Ammonium Quaternary Cationic Surfactant
- EGMBE: Ethylene Glycol Monobutyl Ether
- TTPC: Tributyl Tetradecyl Phosphonium Chloride (TTPC) which was a 50 wt. % aqueous solution of Tributyl Tetradecyl Phosphonium Chloride
- WTW tap water: Tap Water having the following composition: 12 ppm chloride, 400 ppb Mn, 5 ppm sulfate, 105 ppm TDS (total dissolved solids), 53 ppm bicarbonate, 11 ppm Ca, 0.14 ppm chlorate, 47 CaCO3, 5 ppm Mg, pH 7.7, 14 pm Na, Total alkalinity 53 ppm
- THPS:: a 75% aqueous solution of tetrakis(hydroxymethyl)phosphonium sulphate
- VDPA copolymer:: 50% aqueous solution of VDPA copolymer: a vinylidene-diphosphonic acid-terminated acrylic/vinylsulphonate copolymer of weight average molecular weight 5000 - 6000 g/mol. In particular the anionic copolymer of the examples use a VDPA end-capped copolymer of AA and VSA which is a vinylidene-diphosphonic acid-terminated acrylic/vinylsulphonate anionic copolymer of weight average molecular weight 5000 - 6000 g/mol provided as a polyanionic solution, wherein the molar ratio of AA (Acrylic acid monomer) and VSA (Vinyl sulphonate monomer) was about 50:50. This is a biopenetrant.

In the examples, all wt.% are of active ingredient unless otherwise indicated.

### Example 1 - Physical Compatibility Studies

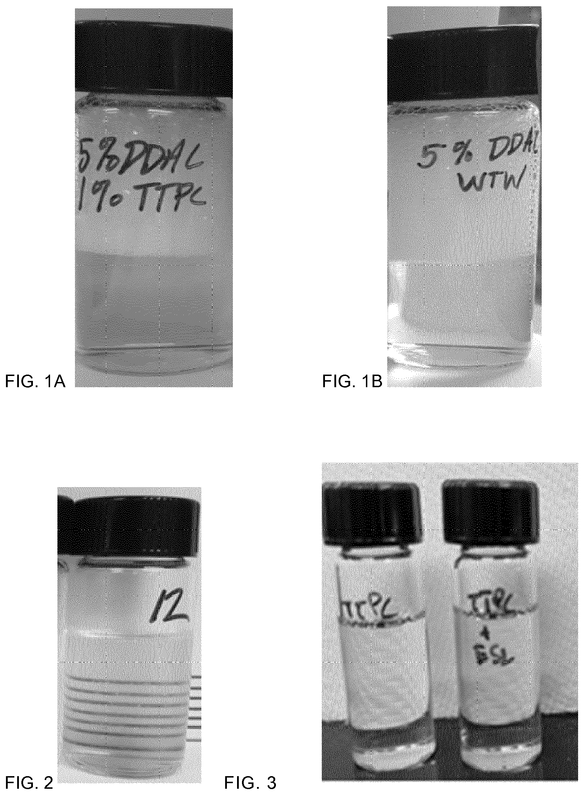

A first set of samples was made by combining Didecyldimethylammonium chloride (DDAC) Ammonium Quaternary Cationic Surfactant, and Tributyl Tetradecyl Phosphonium Chloride (TTPC). These ingredients were combined in a 20 mL borosilicate vial with a plastic cap to a total volume of 10 mLs so that the final concentration of DDAC was 5 wt.% active ingredient and the final concentration of TTPC was 1 wt. % active ingredient. The total volume was achieved by mixing with tap water (WTW). Samples were mixed, capped, and shaken vigorously and allowed to sit at room temperature for up to 24 hours. FIG. 1 shows a vial with 5 wt. % DDAC and 1 wt. % TTPC with the balance tap water (WTW). All weight percent values in the examples are wt. % active ingredient. FIG. 2 shows a vial with 5 wt. % DDAC with the balance tap water (WTW). FIG. 1 shows the combination of TTPC and DDAC was physically compatible and improves the compatibility of DDAC in water. FIG. 2 shows some cloudiness.

### Example 2 - Physical Compatibility Studies

Another test sample consisted of 20 wt. % THPS, 2 wt. % VDPA copolymer biopenetrant, 4 wt. % DDAC, 4 wt. % TTPC, and 35 wt. % Ethylene Glycol Monobutyl Ether (EGMBE, which was used as a mutual solvent) (wt. % active ingredients) and was mixed as were the samples of Example 1 and brought to a total volume of 13.9 mLs with tap water (WTW).

FIG. 2 shows the sample and shows TTPC made the THPS, VDPA copolymer, DDAC, and EGMBE in this mixture compatible.

Additionally, the VDPA copolymer /TTPC mixture appears to be thermally stable over time and does not appreciably degrade over time.

Additionally, DDAC is sparingly soluble in water and will sometimes form a cloudy mixture. The addition of TTPC reduces this slight incompatibility.

### Example 3 - Physical Compatibility Studies

Two additional samples were made. One was TTPC aqueous solution (50 wt. % a.i.) which was TTPC alone with the balance water (labelled TTPC). The other sample was made of 95 wt. % TTPC aqueous solution (50 wt. % a.i.) combined with a 5 wt. % VDPA copolymer aqueous solution (50 wt. % a.i.)(labelled TTPC + ESL). Thus, the final concentration on an active ingredient basis was 47.5% wt. % TTPC and 2.5 wt.% VDPA copolymer with the balance water. This comparison was made to determine the compatibility of the mixture without mutual solvent. FIG. 3 shows the sample of TTPC/ VDPA copolymer in water without mutual solvent (labelled TTPC + ESL) was just as stable as the sample of TTPC alone in water (labelled TTPC). Thus, FIG. 3 shows even a large concentration of TTPC (quaternary phosphonium surfactant compound) and VDPA copolymer (anionic scale inhibitor) are physically compatible. This is important because DDAC or ADBAC will precipitate in the presence of VDPA copolymer.

Also, the TTPC + ESL mixture was shown to be stable at -4 °C, 4 °C, and 40 °C for 35 days without separation or precipitation. However, the sample was frozen at - 25 °C. TTPC was also frozen at -25 C.

### Example 4 - Biocidal Efficacy Studies

To test biocidal efficacy of TTPC in the presence of VDPA anionic copolymer two additional samples were made. One was 50 wt. % TTPC (a.i.) alone with the balance water (labelled TTPC). The other was TTPC combined with VDPA copolymer with the balance water (labelled TTPC A) which was 47.5% TTPC (a.i.) and 2.5% VDPA copolymer biopenetrant.

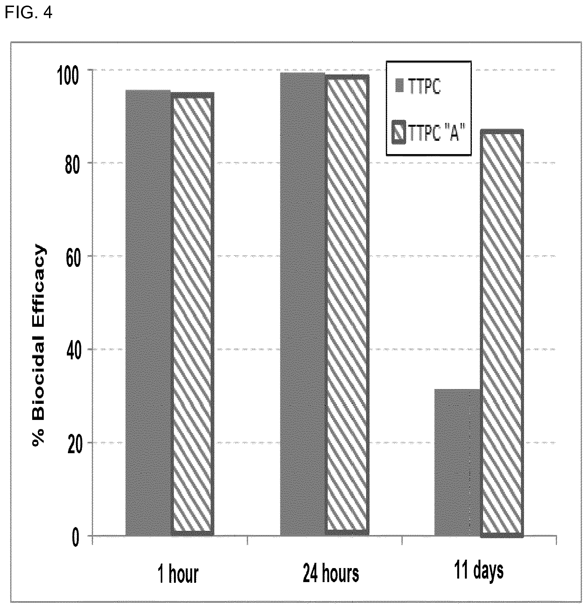

A standard biofilm was grown with *Pseudomonas aeruginosa,* a known biofilm former and General Heterotrophic Bacteria (GHB), and treated with either the TTPC or TTPC A Series samples. Pseudomonas aeruginosa was cultured in a media of tryptone soy broth and grown at room temperature with gentle stirring. This culture solution was slowly passed through a Modified Robbins Device (MRD) from Tyler Research for approximately 6 weeks to establish a robust biofilm. Once the film was established, 100 ppm of TTPC Series or TTPC A Series was dosed to the biofilms and the efficacy of the biocide on the microorganisms was measured as shown in FIG. 4.

FIG. 4 compares % Biocidal Efficiency of TTPC versus TTPC A Series and shows the TTPC A Series mixture displayed enhanced efficacy against biofilm than the TTPC mixture of just TTPC.

FIG. 4 shows results of planktonic efficacy studies (not sessile efficacy studies).

Both formulations were effective against planktonic bacteria. However, FIG. 4 shows the TTPC A Series demonstrated enhanced efficacy over time when compared to just TTPC. This suggests that the addition of TTPC to VDPA copolymer does not hinder the performance of VDPA copolymer. It also shows VDPA copolymer does not hinder the performance of TTPC.

### Clauses of the invention

The following clauses present aspects of the present invention.

Clause 1. A composition comprising:
a phosphonium quaternary surfactant compound, wherein the phosphonium quaternary surfactant compound is a tetra alkyl phosphonium compound having a formula (I): 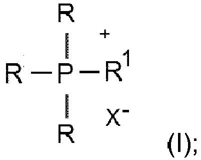 wherein each R is independently a C1-C6 alkyl group which is unsubstituted or substituted by a cyano, hydroxyl, esterified hydroxyl or aryl group; R1 represents a C8-C18 alkyl group which is linear or branched; and X represents either chlorine or bromine;
at least one quaternary ammonium cationic surfactant biocide; and
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having vinylphosphonic acid and/or vinylidene-1, 1-diphosphonic acid monomers incorporated into the polymer or copolymer backbone, or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone.

Clause 2. The composition according to Clause 1, further comprising a tetrakis(hydroxyalkyl)phosphonium salt (THP salt), wherein the salt is selected from the group consisting of sulphate, phosphite, bromide, fluoride, chloride, phosphate, carbonate, acetate, formate, citrate, borate, and silicate.

Clause 3. The composition according to Clause 2, in which the THP salt is tetrakis(hydroxymethyl) phosphonium phosphite, bromide, fluoride, chloride, phosphate, carbonate, acetate, formate, citrate, borate or silicate.

Clause 4. A composition according to Clause 2, in which the THP salt is tetrakis(hydroxymethyl) phosphonium sulphate.

Clause 5. The composition according to any one of Claims 1 to 4, wherein the polymer or copolymer of the biopenetrant is a polyacrylate or an acrylic/ vinylsulphonate copolymer.

Clause 6. The composition according to any one of Clauses 1 to 4, in which the biopenetrant is a vinylphosphonic acid end-capped acrylic polymer or a vinylidene-1, 1-diphosphonic acid end-capped acrylic polymer or an acrylic polymer incorporating vinylphosphonic acid and/or vinylidene-1, 1-diphosphonic acid monomers.

Clause 7. The composition according to Clause 1, in which the biopenetrant is a vinylphosphonic acid end-capped acrylic/vinylsulphonate copolymer or a vinylidene-1, 1-diphosphonic acid end-capped acrylic/vinylsulphonate copolymer or an acrylate/vinylsulphonate copolymer incorporating vinylphosphonic acid and/or vinylidene-1, 1-diphosphonic acid monomers.

Clause 8. The composition according to any of Clauses 1 to 7, comprising
1 to 20 wt. %, preferably 2 to 10 wt. % of the phosphonium quaternary surfactant compound;
0.5 to 30 wt. %, preferably 1 to 15 wt. % of the quaternary ammonium cationic surfactant;
0.25 to 10 wt. %, preferably 0.25 to 5 wt. %, of the biopenetrant; and
0 to 50 wt. %, preferably 15 to 50 wt. % of the tetrakis(hydroxyalkyl)phosphonium salt (THP salt) biocide.

Clause 9. The composition according to any of Clauses 1 to 8, in which the cationic quaternary ammonium surfactant comprises at least one mono-cationic surfactant according to formula (III): 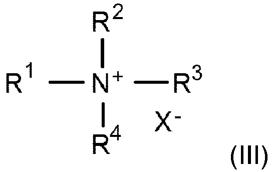 wherein:
R¹, R², R³, and R⁴ are each independently an organic group; preferably R¹ and R² are an aryl or alkaryl group or C₈ to C₃₀ alkyl group; preferably R³ and R⁴ are an aryl or alkaryl group or a C₁ to C₃₀ alkyl group; and
X⁻ is an anion, typically a chloride, bromide, methosulfate, ethosulfate, lactate, saccharinate, acetate or phosphate anion.

Clause 10. The composition according to Clause 1, wherein the quaternary ammonium cationic surfactant comprises at least one of Alkyl Dimethyl Benzyl Ammonium Chloride, didecyldimethyl ammonium chloride, dioctyldimethyl ammonium chloride, cetyl trimethyl ammonium bromide, cetyl trimethyl ammonium chloride, myristyl trimethyl ammonium bromide, stearyl dimethyl benzyl ammonium chloride (also known as stearalkonium chloride), oleyl dimethyl benzyl ammonium chloride, olealkonium chloride, lauryl/myristryl trimethyl ammonium methosulfate, cetyl dimethyl (2)hydroxyethyl ammonium dihydrogen phosphate, cocotrimonium chloride, distearyldimonium chloride, wheat germ-amidopropalkonium chloride, stearyl octyldimonium methosulfate, isostearaminopropalkonium chloride, dihydroxypropyl PEG-5 linoleaminium chloride, PEG-2 stearmonium chloride, Quaternium 18, Quaternium 80, Quaternium 82, Quaternium 84, behentrimonium chloride, dicetyl dimonium chloride, behentrimonium methosulfate, tallow trimonium chloride, and/or behenamidopropyl ethyl dimonium ethosulfate.

Clause 11. The composition according to Clause 1, in which the quaternary ammonium cationic surfactant comprises at least one benzalkonium salt having a benzyl group, one 8 to 20 C alkyl group and two 1 to 4 carbon alkyl groups linked to its quaternary nitrogen atom.

Clause 13. The composition according to Clause 1, wherein each R is independently a C1-C4 alkyl group; R¹ represents a C8-C18 alkyl group; and X represents either chlorine or bromine.

Clause 14. The composition according to Clause 1, wherein each R is independently a C3-C5 alkyl group; R¹ represents a C12-C16 alkyl group; and X represents either chlorine or bromine.

Clause 15. The composition according to Clause 1, wherein the phosphonium quaternary surfactant compound comprises tributyl-tetradecylphosphonium chloride.

Clause 16. A method of treating a water system contaminated, or liable to contamination, with microbes selected from at least one of bacteria, fungi and algae, which method comprises adding to the system separately or together:
a phosphonium quaternary surfactant compound, wherein the phosphonium quaternary surfactant compound is a tetra alkyl phosphonium compound having a formula (I): 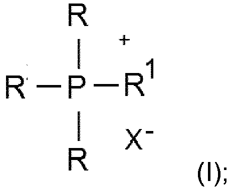 wherein each R is independently a C1-C6 alkyl group which is unsubstituted or substituted by a cyano, hydroxyl, esterified hydroxyl or aryl group; R1 represents a C8-C18 alkyl group which is linear or branched; and X represents either chlorine or bromine;
a biocidally active amount of at least one quaternary ammonium cationic surfactant; and
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having vinylphosphonic acid and/or vinylidene-1, 1-diphosphonic acid monomers incorporated into the polymer or copolymer backbone, or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone;and
optionally a biocidally active amount of a tetrakis(hydroxyalkyl)phosphonium salt, wherein the salt is selected from the group consisting of sulphate, phosphite, bromide, fluoride, chloride, phosphate, carbonate, acetate, formate, citrate, borate, and silicate;
thereby reducing population of the microorganisms by at least 90%.

Clause 17. The method of treating according to Clause 16, further comprising the tetrakis(hydroxyalkyl)phosphonium salt and dissolving metal sulphide scale and/or schmoo.

Clause 18. The method of treating according to Clause 17, wherein the metal sulphide is iron sulphide.

Clause 19. The method of treating according to Clause 16, wherein the microorganisms include planktonic (free-swimming) and/or sessile (attached) bacteria.

Clause 20. The method of treating according to Clause 16, wherein the reducing population of the microorganisms is by at least 99% if determined by ATP testing.

Clause 21. The method of Clause 16, wherein the water system is used or is present in oil or gas extraction, production or transportation.

Clause 22. A method of treating a water system contaminated, or liable to contamination, with microbes selected from at least one of bacteria, fungi and archaea which method comprises adding to the system separately or together, the composition according to any of Clauses 1-15, thereby killing at least some of the microbes.

Clause 24. The method of Clause 23, wherein the scale is iron sulphide scale.

Clause 25. The method of treating according to Clause 23, wherein the water system treated is a system for injection water for injection into a subterranean formation, a system for produced water produced by a subterranean formation, a cooling water system, or an industrial process water system and the population of the microorganisms is reduced by at least 99% as determined by ASTM E645-18.

Clause 26. The method of Clause 23, wherein oil or gas production comprises injection and produced water, source water for waterflooding and hydraulic fracturing, pond water, holding tank water, functional fluids, drilling muds, completion and workover fluids, hydrotest fluids, stimulation fluids, packer fluids, fracturing fluids, oil and gas wells, separation, storage and transportation systems, oil and gas pipelines, oil and gas vessels, or fuel.

Clause 27. The method of Clause 23, wherein the water system is cooling water, air washer, heat exchangers, boiler water, pulp and paper mill water, other industrial process water, ballast water, wastewater, metalworking fluids, latex, paint, coatings, adhesives, inks, tape joint compounds, pigment, water-based slurries, membrane and filtration systems, leather and leather production system, or a system used therewith.

Clause 28. A composition comprising:
a phosphonium quaternary surfactant compound, wherein the phosphonium quaternary surfactant compound is a tetra alkyl phosphonium compound having a formula (I): 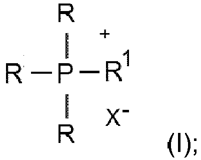 wherein each R is independently a C1-C6 alkyl group which is unsubstituted or substituted by a cyano, hydroxyl, esterified hydroxyl or aryl group; R1 represents a C8-C18 alkyl group which is linear or branched; and X represents either chlorine or bromine; and
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having vinylphosphonic acid and/or vinylidene-1, 1-diphosphonic acid monomers incorporated into the polymer or copolymer backbone, or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone.

Clause 29. A method of treating a water system contaminated, or liable to contamination, with microbes selected from at least one of bacteria, fungi and algae, which method comprises adding to the system separately or together:
a phosphonium quaternary surfactant compound, wherein the phosphonium quaternary surfactant compound is a tetra alkyl phosphonium compound having a formula (I): 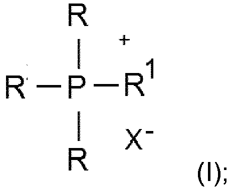 wherein each R is independently a C1-C6 alkyl group which is unsubstituted or substituted by a cyano, hydroxyl, esterified hydroxyl or aryl group; R1 represents a C8-C18 alkyl group which is linear or branched; and X represents either chlorine or bromine; and
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having vinylphosphonic acid and/or vinylidene-1, 1-diphosphonic acid monomers incorporated into the polymer or copolymer backbone, or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone;and
optionally a biocidally active amount of a tetrakis(hydroxyalkyl)phosphonium salt, wherein the salt is selected from the group consisting of sulphate, phosphite, bromide, fluoride, chloride, phosphate, carbonate, acetate, formate, citrate, borate, and silicate;
thereby reducing population of the microorganisms by at least 90%.

Clause 30. A method of treating a water system containing or in contact with a metal sulphide scale or schmoo, which method comprises adding to said system separately or together:
a phosphonium quaternary surfactant compound, wherein the phosphonium quaternary surfactant compound is a tetra alkyl phosphonium compound having a formula (I): 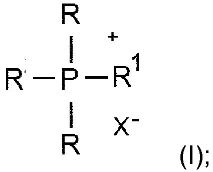 wherein each R is independently a C1-C6 alkyl group which is unsubstituted or substituted by a cyano, hydroxyl, esterified hydroxyl or aryl group; R1 represents a C8-C18 alkyl group which is linear or branched; and X represents either chlorine or bromine; and
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone;
a biocidally active amount of a tetrakis(hydroxyalkyl)phosphonium salt, wherein the salt is selected from the group consisting of sulphate, phosphite, bromide, fluoride, chloride, phosphate, carbonate, acetate, formate, citrate, borate, and silicate; and
a biocidally active amount of a tetrakis(hydroxyalkyl)phosphonium salt (THP salt), wherein the salt is selected from the group consisting of sulphate, phosphite, bromide, fluoride, chloride, phosphate, carbonate, acetate, formate, citrate, borate, and silicate;
thereby dissolving at least part of the scale or schmoo.

It should be understood that the invention is not limited by the above description but rather by the claims appended hereto.

## Claims

1. A composition comprising:
a phosphonium quaternary surfactant compound, wherein the phosphonium quaternary surfactant compound is a tetra alkyl phosphonium compound having a formula (I): 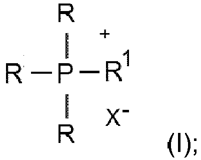 wherein each R is independently a C1-C6 alkyl group which is unsubstituted or substituted by a cyano, hydroxyl, esterified hydroxyl or aryl group; R1 represents a C8-C18 alkyl group which is linear or branched; and X represents either chlorine or bromine;
at least one quaternary ammonium cationic surfactant biocide; and
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having vinylphosphonic acid and/or vinylidene-1, 1-diphosphonic acid monomers incorporated into the polymer or copolymer backbone, or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone.

2. The composition according to Claim 1, further comprising a tetrakis(hydroxyalkyl)phosphonium salt (THP salt), wherein the salt is selected from the group consisting of sulphate, phosphite, bromide, fluoride, chloride, phosphate, carbonate, acetate, formate, citrate, borate, and silicate.

3. A composition according to Claim 2, in which the THP salt is tetrakis(hydroxymethyl) phosphonium sulphate.

4. The composition according to any one of Claims 1 to 3, wherein the polymer or copolymer of the biopenetrant is a polyacrylate or an acrylic/ vinylsulphonate copolymer.

5. The composition according to any of claims 1 to 4, comprising
1 to 20 wt. %, preferably 2 to 10 wt. % of the phosphonium quaternary surfactant compound;
0.5 to 30 wt. %, preferably 1 to 15 wt. % of the quaternary ammonium cationic surfactant;
0.25 to 10 wt. %, preferably 0.25 to 5 wt. %, of the biopenetrant; and
0 to 50 wt. %, preferably 15 to 50 wt. % of the tetrakis(hydroxyalkyl)phosphonium salt (THP salt) biocide.

6. The composition according to anyone of claims 1 to 5, wherein the quaternary ammonium cationic surfactant comprises at least one of Alkyl Dimethyl Benzyl Ammonium Chloride, didecyldimethyl ammonium chloride, dioctyldimethyl ammonium chloride, cetyl trimethyl ammonium bromide, cetyl trimethyl ammonium chloride, myristyl trimethyl ammonium bromide, stearyl dimethyl benzyl ammonium chloride (also known as stearalkonium chloride), oleyl dimethyl benzyl ammonium chloride, olealkonium chloride, lauryl/myristryl trimethyl ammonium methosulfate, cetyl dimethyl (2)hydroxyethyl ammonium dihydrogen phosphate, cocotrimonium chloride, distearyldimonium chloride, wheat germ-amidopropalkonium chloride, stearyl octyldimonium methosulfate, isostearaminopropalkonium chloride, dihydroxypropyl PEG-5 linoleaminium chloride, PEG-2 stearmonium chloride, Quaternium 18, Quaternium 80, Quaternium 82, Quaternium 84, behentrimonium chloride, dicetyl dimonium chloride, behentrimonium methosulfate, tallow trimonium chloride, and/or behenamidopropyl ethyl dimonium ethosulfate.

7. The composition according to anyone of claims 1 to 6, wherein the phosphonium quaternary surfactant compound comprises tributyl-tetradecylphosphonium chloride.

8. Use of a composition comprising:
a phosphonium quaternary surfactant compound, wherein the phosphonium quaternary surfactant compound is a tetra alkyl phosphonium compound having a formula (I): 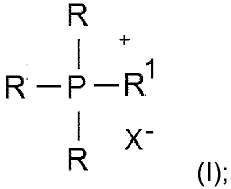 wherein each R is independently a C1-C6 alkyl group which is unsubstituted or substituted by a cyano, hydroxyl, esterified hydroxyl or aryl group; R1 represents a C8-C18 alkyl group which is linear or branched; and X represents either chlorine or bromine;
a biocidally active amount of at least one quaternary ammonium cationic surfactant; and
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having vinylphosphonic acid and/or vinylidene-1, 1-diphosphonic acid monomers incorporated into the polymer or copolymer backbone, or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone;and
optionally a biocidally active amount of a tetrakis(hydroxyalkyl)phosphonium salt, wherein the salt is selected from the group consisting of sulphate, phosphite, bromide, fluoride, chloride, phosphate, carbonate, acetate, formate, citrate, borate, and silicate;
for treating a water system contaminated, or liable to contamination, with microbes selected from at least one of bacteria, fungi and algae, thereby reducing population of the microorganisms by at least 90%.

9. The use according to claim 8, the composition further comprising the tetrakis(hydroxyalkyl)phosphonium salt and dissolving metal sulphide scale and/or schmoo.

10. The use according to claim 8 or 9, wherein the reducing population of the microorganisms is by at least 99% if determined by ATP testing.

11. Use of a composition comprising:
a phosphonium quaternary surfactant compound, wherein the phosphonium quaternary surfactant compound is a tetra alkyl phosphonium compound having a formula (I): 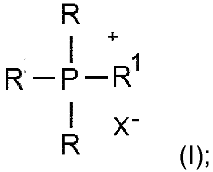 wherein each R is independently a C1-C6 alkyl group which is unsubstituted or substituted by a cyano, hydroxyl, esterified hydroxyl or aryl group; R1 represents a C8-C18 alkyl group which is linear or branched; and X represents either chlorine or bromine;
a biocidally active amount of at least one quaternary ammonium cationic surfactant; and
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone;
a biocidally active amount of a tetrakis(hydroxyalkyl)phosphonium salt, wherein the salt is selected from the group consisting of sulphate, phosphite, bromide, fluoride, chloride, phosphate, carbonate, acetate, formate, citrate, borate, and silicate; and
a biocidally active amount of a tetrakis(hydroxyalkyl)phosphonium salt (THP salt), wherein the salt is selected from the group consisting of sulphate, phosphite, bromide, fluoride, chloride, phosphate, carbonate, acetate, formate, citrate, borate, and silicate;
for treating a water system containing or in contact with a metal sulphide scale or schmoo, preferably iron sulphide scale, thereby dissolving at least part of the scale or schmoo.

12. The use according to claim 11, wherein the water system treated is a system for injection water for injection into a subterranean formation, a system for produced water produced by a subterranean formation, a cooling water system, or an industrial process water system and the population of the microorganisms is reduced by at least 99% as determined by ASTM E645-18.

13. A composition comprising:
a phosphonium quaternary surfactant compound, wherein the phosphonium quaternary surfactant compound is a tetra alkyl phosphonium compound having a formula (I): 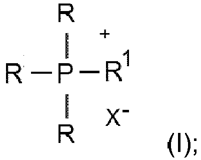 wherein each R is independently a C1-C6 alkyl group which is unsubstituted or substituted by a cyano, hydroxyl, esterified hydroxyl or aryl group; R1 represents a C8-C18 alkyl group which is linear or branched; and X represents either chlorine or bromine; and
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having vinylphosphonic acid and/or vinylidene-1, 1-diphosphonic acid monomers incorporated into the polymer or copolymer backbone, or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone.

14. Use of a composition comprising:
a phosphonium quaternary surfactant compound, wherein the phosphonium quaternary surfactant compound is a tetra alkyl phosphonium compound having a formula (I): 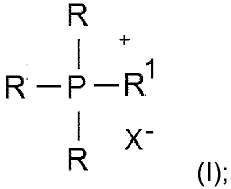 wherein each R is independently a C1-C6 alkyl group which is unsubstituted or substituted by a cyano, hydroxyl, esterified hydroxyl or aryl group; R1 represents a C8-C18 alkyl group which is linear or branched; and X represents either chlorine or bromine; and
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having vinylphosphonic acid and/or vinylidene-1, 1-diphosphonic acid monomers incorporated into the polymer or copolymer backbone, or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone;and
optionally a biocidally active amount of a tetrakis(hydroxyalkyl)phosphonium salt, wherein the salt is selected from the group consisting of sulphate, phosphite, bromide, fluoride, chloride, phosphate, carbonate, acetate, formate, citrate, borate, and silicate;
for treating a water system contaminated, or liable to contamination, with microbes selected from at least one of bacteria, fungi and algae, thereby reducing population of the microorganisms by at least 90%.

15. Use of a composition comprising:
a phosphonium quaternary surfactant compound, wherein the phosphonium quaternary surfactant compound is a tetra alkyl phosphonium compound having a formula (I): 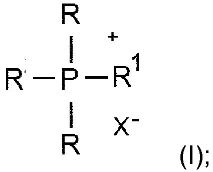 wherein each R is independently a C1-C6 alkyl group which is unsubstituted or substituted by a cyano, hydroxyl, esterified hydroxyl or aryl group; R1 represents a C8-C18 alkyl group which is linear or branched; and X represents either chlorine or bromine; and
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone;
a biocidally active amount of a tetrakis(hydroxyalkyl)phosphonium salt, wherein the salt is selected from the group consisting of sulphate, phosphite, bromide, fluoride, chloride, phosphate, carbonate, acetate, formate, citrate, borate, and silicate; and
a biocidally active amount of a tetrakis(hydroxyalkyl)phosphonium salt (THP salt), wherein the salt is selected from the group consisting of sulphate, phosphite, bromide, fluoride, chloride, phosphate, carbonate, acetate, formate, citrate, borate, and silicate;
for treating a water system containing or in contact with a metal sulphide scale or schmoo, thereby dissolving at least part of the scale or schmoo.
